# EUROPEAN PATENT APPLICATION

(11) **EP 1 005 226 A2**
(43) Date of publication of application: **31.05.2000**
(21) Application number: 99309303.8
(22) Date of filing: 23.11.1999
(51) Int. Cl.: H04N 5/783

(54) **MPEG reproducing apparatus and methods**

(30) Priority: 25.11.1998 JP 33375598; 03.12.1998 JP 34453598
(71) Applicant: SONY CORPORATION, Tokyo 141 (JP)
(72) Inventor: Ikeda, Kiyoshi, c/o Intellectual Property Dept., Shinagawa-ku, Toyko 141 (JP); Himeno, Takuji, Intellectual Property Department, Shinagawa-ku, Tokyo 141 (JP)
(74) Representative: Pilch, Adam John Michael

(57) **Abstract**

An MPEG reproducing apparatus for reproducing an MPEG bit stream based on an MPEG standard comprises a picture type identifying element (30) for identifying picture types of the MPEG bit streams, a reversely-reproduced picture controlling element (40) for controlling a decoding sequence of the MPEG bit streams in accordance with the picture types upon reverse reproduction, an MPEG decoding element (50) for generating picture data by subjecting to MPEG decoding the bit stream designated by the reversely reproduced picture controlling element (40), and a frame storing element (60) for storing the picture data, thereby providing an apparatus for reproducing all MPEG frames in reverse at single speed.

## Description

The present invention relates to apparatus and methods for recording and reproducing motion pictures and, more particularly, to an MPEG reproducing apparatus and an MPEG reproducing method for reproducing MPEG bit streams.

Reproducing apparatuses for reproducing motion picture data provided on media compressed and recorded according to the MPEG have come into widespread use today. With any one of these reproducing apparatuses, there may be a case where MPEG-compressed motion picture data are reproduced in the reverse direction from a medium that carries the data. In such a case, pictures must be first decoded in the forward direction in units of a GOP (group of pictures) and then reproduced in reverse because the MPEG technology utilizes inter-frame prediction.

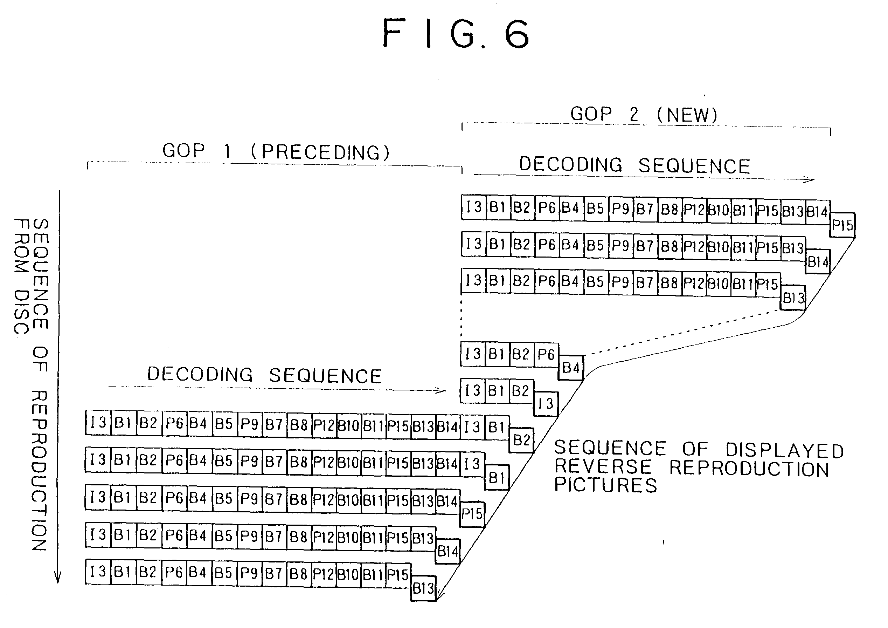

Data are reproduced in the reverse direction from a disc medium such as a DVD illustratively as follows. Fig. 6 is a schematic view illustrating a related art reverse reproducing method for use with DVD. In Fig. 6, reference character I stands for I-pictures, P for P-pictures, and B for B-pictures. Numbers attached to the pictures show the sequence in which the pictures are displayed. With disc media such as DVD in use, the same data can be played back repeatedly. For such reverse playback, data are reproduced from the disc first in the forward direction to let a bit stream of a single GOP sequentially enter a decoder from the beginning thereof. For each picture to be displayed, the data are decoded and displayed up to a specific frame. When the data constituting a given GOP have been finished, another GOP preceding the just-finished GOP is reached for the same process.

Specifically, I3 through B14 of GOP2 are first decoded; P15 (the last frame) is displayed; I3 through G14 are again decoded; B14 is then displayed; and so on, whereby GOP2 is reproduced in reverse. When reverse reproduction of GOP2 is completed, GOP1 preceding GOP2 is reached for the same process of reverse reproduction.

Such related art reproducing apparatuses, however, have a problem: they cannot implement a reverse single-speed playback if the speed of data transfer from the medium or the processing capability of an MPEG decoder in use corresponds to an average of one frame per frame time, as in forward reproduction.

At the time of reverse reproduction, data must be first decoded in the forward direction in units of a GOP. If each GOP illustratively includes 15 pictures (N = 15), then merely one-fifteenth speed, very slow reverse reproduction is implemented.

One way to bypass the above problem is by removing only I-pictures from bit streams upon reverse reproduction. This, however, results in intermittently reproduced pictures showing disjointed movements that are awkward to watch.

It is therefore an aim of at least an embodiment of the present invention to overcome the above and other deficiencies of the prior art and to provide an MPEG reproducing apparatus and an MPEG reproducing method for implementing single-speed MPEG reproduction of all frames in the reverse direction.

According to a first aspect of the invention, there is provided an MPEG reproducing apparatus for reproducing MPEG bit streams based on an MPEG standard, the apparatus comprising: a picture type identifying means for identifying picture types of the MPEG bit streams; a reversely reproduced picture controlling means for controlling a decoding sequence of the MPEG bit streams in accordance with the picture types upon reverse reproduction; an MPEG decoding means for generating picture data by subjecting to MPEG decoding the bit stream designated by the reversely reproduced picture controlling means; and a frame storing means for storing the picture data.

The MPEG reproducing apparatus of the above constitution first identifies picture types of MPEG bit streams and retains the picture type information. At the time of reverse reproduction, the reversely reproduced picture controlling means determines the decoding sequence of the bit streams in accordance with the picture type information thus retained. The MPEG decoding means decodes the bit streams in the determined sequence. The decoded information is held in the frame storing means to be used as a reference picture or for display.

According to a second aspect of the invention, there is provided an MPEG reproducing apparatus for reproducing MPEG bit streams, comprising: a picture type identifying means for identifying picture types of the MPEG bit streams; a reversely reproduced picture controlling means for decoding bit streams of I-pictures and P-pictures of a GOP, prior to decoding a bit stream of B-pictures of the same GOP; an MPEG decoding means for generating picture data by subjecting to MPEG decoding the bit stream designated by the reversely reproduced picture controlling means; and a frame storing means for storing all I-picture data and P-picture data included in the GOP.

The MPEG reproducing apparatus of the structure outlined above also identifies picture types of MPEG bit streams and retains the picture type information. Upon reverse reproduction, the reversely reproduced picture controlling means causes the MPEG decoding means to decode I-pictures and P-pictures of a given GOP prior to decoding the B-picture on the basis of the retained picture type information. After being decoded, the I-picture data and P-picture data of the GOP are stored into the frame storing means for use either as reference pictures of the B-picture or for display purposes.

According to a third aspect of the invention, there is provided an MPEG reproducing method for reproducing MPEG bit streams, comprising the steps of: identifying picture types of the MPEG bit streams by analyzing headers thereof; rearranging a decoding sequence of the MPEG bit streams in accordance with the picture types upon reverse reproduction; generating picture data by subjecting the MPEG bit streams to MPEG decoding in the sequence rearranged in the rearranging step; and storing the created picture data as needed.

Through the use of the MPEG reproducing method comprising the above steps, headers of MPEG bit streams are first analyzed in order to identify picture types of the bit streams, and the picture type information is retained. At the time of reverse reproduction, the sequence of the bit streams to be supplied to an MPEG decoder is determined in accordance with the picture type information. The MPEG bit streams are decoded successively in the sequence thus determined. After being MPEG-decoded, the picture data are stored as needed.

According to a fourth aspect thereof, there is provided an MPEG reproducing apparatus for reproducing MPEG bit streams, the apparatus comprising: an MPEG picture selecting means for selecting picture data of specific picture types after identifying the picture types of the MPEG bit streams upon reverse reproduction; an MPEG decoding means for decoding the MPEG picture data selected by the MPEG picture selecting means; and a frame storing means for storing the decoded picture data as needed.

In the MPEG reproducing apparatus of the above constitution, the MPEG picture selecting means identifies picture types of input MPEG bit streams, selects data of specific picture types, and outputs the selected data sequentially to the MPEG decoding means. The MPEG decoding means decodes the selected picture data successively. The picture data thus decoded are stored in the frame storing means as needed. The picture data stored in the frame storing means are then displayed in a desired order for reverse reproduction.

According to a fifth aspect of the invention, there is provided an MPEG reproducing method for reproducing MPEG bit streams based on an MPEG standard (MPEG stands for the Moving Picture Experts Group), the method comprising the steps of: reading MPEG bit streams from an MPEG recording medium upon reverse reproduction; selecting picture data of specific picture types after identifying the picture types of the MPEG bit streams; decoding the selected MPEG picture data; storing the decoded picture data as needed; and displaying the stored picture data.

According to the MPEG reproducing methods above, picture types of MPEG bit streams read from an MPEG recording medium are identified upon reverse reproduction. When a specific picture type is detected, the applicable picture data are MPEG-decoded. The picture data thus decoded are stored as needed and displayed.

The invention will now be described by way of example with reference to the accompanying drawings, throughout which like parts are referred to by like references, and in which:
Fig. 1 is a block diagram of an MPEG reproducing apparatus embodying the invention;
Fig. 2 is a block diagram of an MPEG video tape recorder embodying the invention;
Fig. 3 is a schematic view depicting an inventive method used by a rotary head type MPEG video tape recorder for reverse single-speed data reproduction from a video tape;
Fig. 4 is a timing chart applicable to the inventive MPEG reproducing apparatus performing reverse reproduction;
Fig. 5 is a timing chart applicable to another inventive MPEG reproducing apparatus performing reverse reproduction; and
Fig. 6 is a schematic view illustrating a related art reverse reproducing method for use with a DVD.

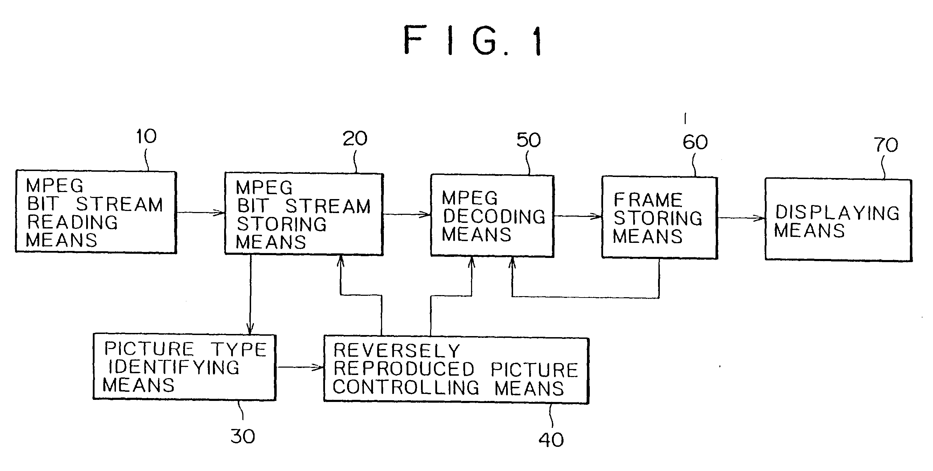

Preferred embodiments of this invention will now be described with reference to the accompanying drawings. Fig. 1 is a block diagram of an MPEG reproducing apparatus embodying the invention. This MPEG reproducing apparatus comprises: an MPEG bit stream reading means 10 for reading MPEG bit streams from an MPEG recording medium; an MPEG bit stream storing means 20 for storing the MPEG bit streams; a picture type identifying means 30 for identifying picture types of the MPEG bit streams; a reversely reproduced picture controlling means 40 for controlling a decoding sequence of the MPEG bit streams upon reverse reproduction; MPEG decoding means 50 for decoding the MPEG bit streams into picture data; a frame storing means 60 for storing the decoded picture data; and a display means 70 for displaying the picture data.

The MPEG bit stream reading means 10 reads MPEG bit streams from such MPEG recording media as a tape or a disc, and outputs the bit streams as needed to the MPEG bit stream storing means 20. The MPEG bit stream storing means 20 stores the MPEG bit streams retrieved from the recording medium by the MPEG bit stream reading means 10. The picture type identifying means 30 identifies picture types of the MPEG bit streams by analyzing headers thereof. The reversely reproduced picture controlling means 40 controls the decoding sequence of the MPEG bit streams in accordance with the picture types input from the picture type identifying means 30 upon reverse reproduction. The MPEG decoding means 50 decodes the pictures designated by the reversely reproduced picture controlling means 40. The frame storing means 60 is a storage medium such as a memory that stores the picture data that have been MPEG-decoded. The display means 70 displays the picture data stored in the frame storing means 60.

What follows is a description of how an inventive MPEG reproducing apparatus of the above structure works by use of an inventive MPEG data reproducing method. MPEG bit streams recorded on such MPEG recording media as a tape or a disc are read by the MPEG bit stream reading means 10, and are stored into the MPEG bit stream storing means 20. The picture type identifying means 30 identifies picture types of the MPEG bit streams by analyzing their headers. Upon reverse reproduction, the reversely reproduced picture controlling means 40 controls the decoding sequence of the MPEG bit streams in keeping with the picture types entered from the picture type identifying means 30.

At this point, illustratively, I-pictures and P-pictures necessary for the creation of B-pictures to be decoded are first selected and decoded so that a bit stream of the B-pictures will be decoded later by referring to the I- and P-pictures. The MPEG decoding means 50 decodes the pictures designated by the reversely reproduced picture controlling means 40. The decoded pictures are stored into the frame storing means 60. At the time of decoding, pictures held in the frame staring means 60 are referenced as needed. The picture data placed into the frame storing means 60 are displayed by the display means 70.

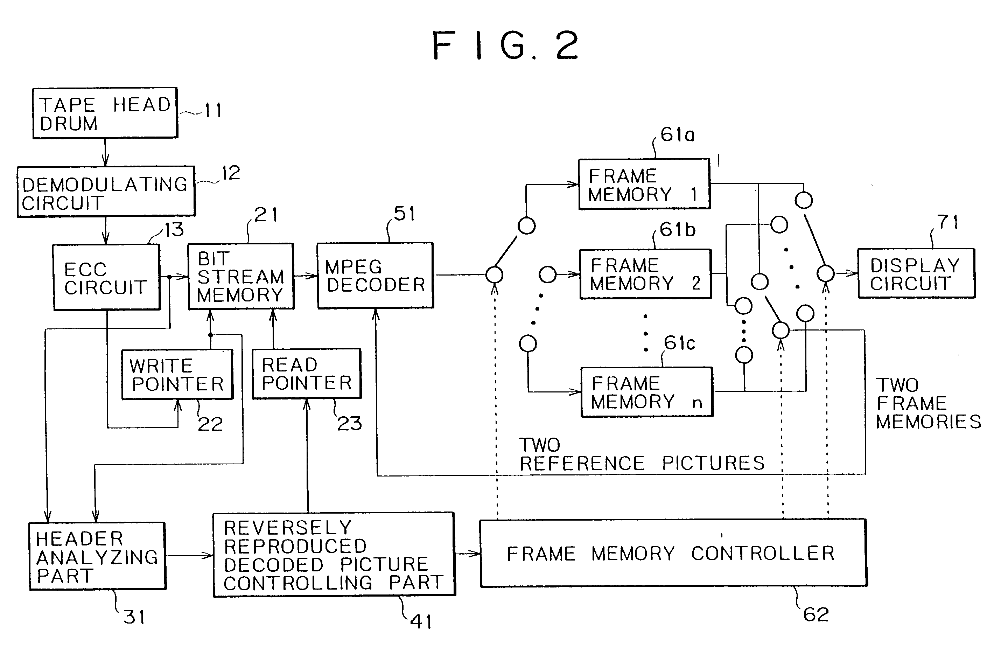

A typical MPEG reproducing apparatus embodying the invention will now be described in detail. Fig. 2 is a block diagram of an MPEG video tape recorder embodying the invention.

The inventive MPEG video tape recorder comprises: a tape head drum 11, a demodulating circuit 12 and an ECC circuit 13 serving as the MPEG bit stream reading means; a bit stream memory 21, a write (WR) pointer 22 and a read (RD) pointer 23 serving as the MPEG bit stream storing means; a header analyzing part 31 as the picture type identifying means; a reversely reproduced decoded picture controlling part 41 as the reversely reproduced picture controlling means; an MPEG decoder 51 as the MPEG decoding means; frame memories 61a, 61b, ... 61n and a frame memory controller 62 serving as the frame storing means 60; and a display circuit 71 as the display means.

The tape head drum 11 scans data recorded on the tape. The demodulating circuit 12 demodulates read-in signals from the tape head drum 11 into digital data. The ECC circuit 13 performs error correction in the demodulated data. The bit stream memory 21 records bit streams output by the ECC circuit 13. The write (WR) pointer 22 is a pointer that is operated when data are written from the ECC circuit 13 to the bit stream memory 21.

The read (RD) pointer 23 is used when bit streams are retrieved from the bit stream memory 21. The header analyzing part 31 analyzes MPEG headers in the data from the bit stream memory 21 to identify picture head addresses and picture types, and retains the information thus obtained. At the time of reverse reproduction, the reversely reproduced decoded picture controlling part 41 selects pictures to be decoded and supplies the read (RD) pointer 23 with the applicable picture head addresses.

The MPEG decoder 51 receives and decodes a bit stream of a single frame whose head address is designated by the read (RD) pointer 23. The frame memories 61 store the decoded pictures. As needed, data are retrieved from the frame memories 61 for use as reference pictures. The frame memory controller 62 controls write-in and read-out operations to and from the frame memories 61, selects the pictures to be displayed, and feeds the selected pictures to the display circuit 71. The display circuit 71 displays the supplied pictures.

The MPEG video tape recorder of the above structure works as follows: when the tape is run in reverse for playback, signals read in by the tape head drum 11 are sent to the demodulating circuit 12 that demodulates the received signals into intermittent digital data. The demodulated data are written in a memory of the ECC circuit 13. The data whose errors are corrected by the ECC circuit 13 are then written successively to the bit stream memory 21 under the direction of the write (WR) pointer 22.

The header analyzing part 31 analyzes MPEG headers in the write data to detect picture heads, and retains picture head write addresses. The header analyzing part 31 also extracts picture types from the picture headers to acquire information about each picture being one of the I, P and P picture types. At the time of reverse reproduction, the reversely reproduced decoded picture controlling part 41 supplies the read (RD) pointer 23 with the corresponding picture head address retained by the header analyzing part 31 in order to select the picture to be reproduced in reverse. The reproduced decoded picture controlling part 41 reads a bit stream for each frame and feeds the bit stream per frame to the MPEG decoder 51.

The MPEG decoder 51 generates a differential image by carrying out inverse VLC, inverse quantization and inverse DCT, and supplements the image with a reference picture compensated by a motion vector before completing the picture. One reference picture is needed for a P-picture and two reference pictures are required for a B-picture. The frame memories 61 have reference pictures retrieved therefrom or have completed pictures written thereto selectively under control of the frame memory controller 62. Pictures to be displayed are also retrieved selectively from the frame memories 61 under control of the frame memory controller 62. The selected pictures are read out in an interlaced fashion per field and sent to the display circuit 71.

Each frame is composed of a first and a second frame in chronological order. Since playback sequence is inverted in the case of reverse single-speed reproduction, the second field is read out first followed by the first field, so that the field sequence in each frame is also inverted. Because the first field of a given frame is continued to the second field of the next frame in reverse playback, the two fields are combined into a single frame by application of synchronizing pulses for output as a video signal onto a monitor.

Although the above apparatus was shown adopting tapes as its recording medium, the present invention is not limited to the embodiment. Alternatively, discs may be used as the recording medium. When data are read from a disc in reverse playback, the reading spot on the disc surface advances in the forward direction within each of data-holding segments that are reached one by one in the reverse direction. After the read data have been written to the bit stream memory 21, the remaining steps are the same as those described above.

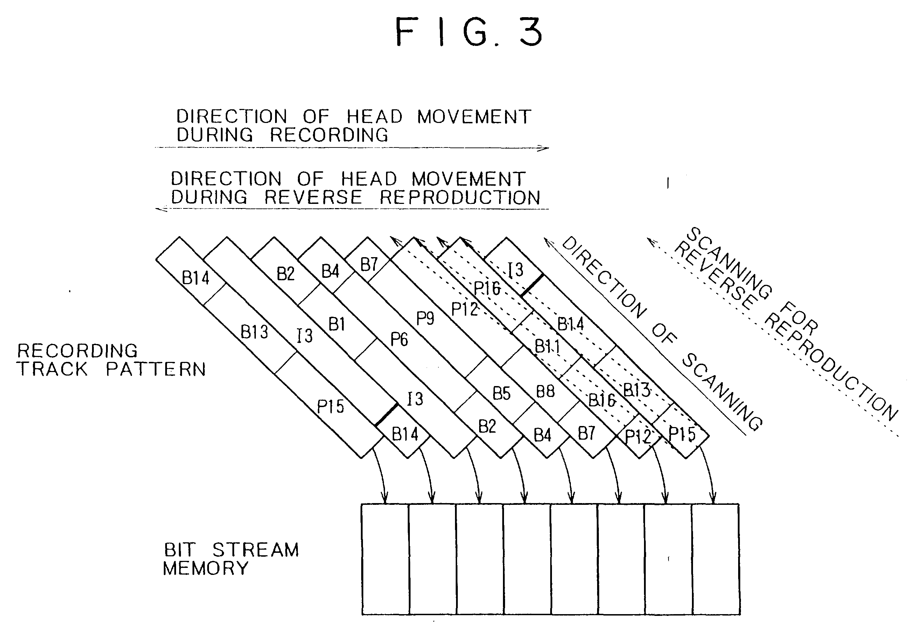

What follows is a description of how an MPEG video tape recorder of the above-described type works in implementing a reverse reproduction operation and a method of MPEG bit streams, along with a typical method by which the recorder operates. The scanning of a video tape for reverse playback is described first. Fig. 3 is a schematic view depicting an inventive method used by a rotary head type MPEG video tape recorder for reverse single-speed data reproduction from a video tape.

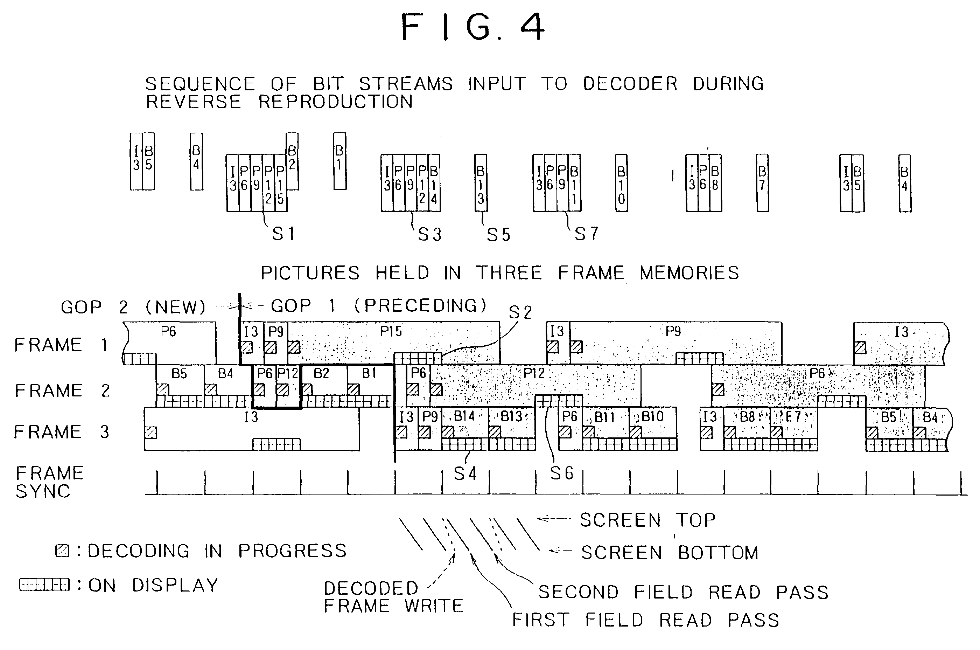

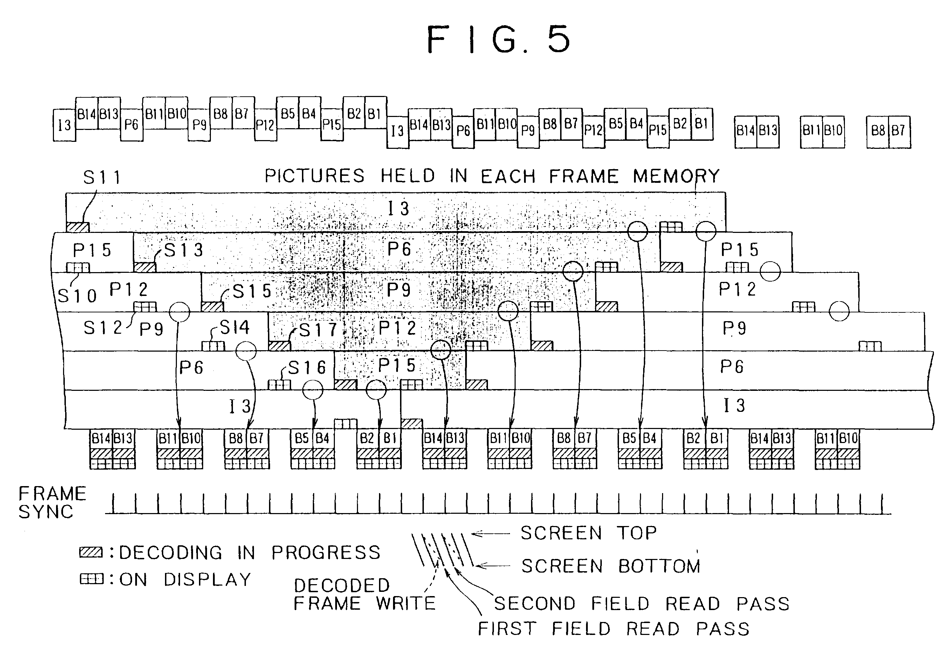

It is assumed here that MPEG video bit streams are recorded successively as shown in Fig 3 on helical scan tracks on the video tape. In Fig. 3, reference character I stands for I-pictures, P for P-pictures and B for B-pictures. Numbers attached to the pictures show the sequence in which the pictures are displayed in the forward direction within each GOP. (The same will apply in Figs. 4 and 5.) For forward playback, the bit stream sequence is constituted by I3, B1, B2, P6, B4, B5, P9, B7, B8, P12, B10, B11, P15, B13 and B14, in that order, since I- and P-pictures are delivered in advance of B-picture.

When the tape medium is subject to reverse data reproduction, the tape is run in reverse at a constant speed. Unlike the disc medium, the tape cannot be run in a manner permitting repetitive playback of the same data. Bit streams reproduced in reverse from the tape are thus stored into the bit stream memory 21 before they are input to the MPEG decoder in a rearranged sequence. When the running direction of the tape is reversed between recording and reproduction, with the drum always rotating in the same direction, the head scan gradient may change, triggering an off-track state involving a deteriorated RF signal level. This bottleneck is bypassed by use of a non-tracking playback system whereby the scanning density of reproduction is made twice as much as that of recording. Thus, the system allows all signals to be picked up as far as reverse single-speed reproduction is concerned.

Described below is a typical sequence of bit streams to be input to the MPEG decoder upon reverse reproduction. For purpose of illustration, consider the case in which the decoder capable of decoding four frames per frame time is used for implementing all-frame reverse reproduction, with three frame memories at single speed. The MPEG decoding for forward reproduction requires using three frame memories in frame time. Fig. 4 is a timing chart applicable to the inventive MPEG reproducing apparatus performing reverse reproduction. It is assumed that N = 15 and M = 3 in each GOP. In Fig. 4, "Frame 1," "Frame 2" and "Frame 3" denote frame memories 1, 2 and 3, respectively. Pictures are each displayed in synchronism with a Frame Sync signal.

The bit streams reproduced from the tape are rearranged in sequence as shown in Fig. 4 before being input to the MPEG decoder. In practice, pictures are input somewhat earlier than normal, in consideration their difference in size. Prior to a bit stream of a B-picture to be decoded, bit streams of the I- and P-pictures necessary for the creation of the B-picture are selectively input to the decoder for sequential decoding. Thereafter the bit stream of the B-picture that will refer to the I- and P-pictures is input to the decoder for decoding. More specifically, while the older one of the I- and P-pictures is left intact in one frame memory, the remaining two frame memories are used to decode again from the bit stream the I- or P-picture three frames ahead so as to complete an image.

A typical decoding sequence of GOP1 is described below. First, I3, P6, P9, P12 and P15 are decoded in that order in order to display P15 (S1). While P15 is being displayed (S2), I3, P6, P9 and P12 are decoded in that order. B14 is then decoded using the remaining one frame memory with reference to P12 and P15 (S3), and the decoded B14 is displayed (S4). Thereafter B13 is decoded by referring to P12 and P15 (S5) and the decoded B13 is displayed. While P12 is again on display (S6), I3, P6 and P9 are decoded in that order to create a B-picture (S7).

Similar steps are performed on a boundary between GOPs. With an I-picture left in the frame memory, the pictures up to the last P-picture in the preceding GOP are decoded successively. After that, a B-picture whose reference picture spans between preceding and following GOPs involved is decoded. In other words, while the I-picture I3 of the new GOP2 is being displayed, pictures I3, P6, P9, P12 and P15 in the preceding GOP are decoded in that order (S1). Then B2 and B1 of GOP2 are decoded and displayed by referring to P15 of GOP1 and I3 of GOP2.

There are cases where decoded pictures are displayed continuously by having them written to the frame memories currently in the display operation. However, since each picture is scanned from top to bottom twice in an interlaced fashion, the decoding need to be completed between the time when the preceding picture is scanned for a field second time and the time when the next picture is scanned for a field first time.

In the manner described, the three frames for forward reproduction may be used unmodified to implement reverse single-speed reproduction of all MPEG frames. Below is a description of the workings of another inventive MPEG reproducing apparatus as it operates using an inventive reverse reproducing method. Fig. 5 is a timing chart of such an MPEG reproducing apparatus performing reverse reproduction. It is assumed here that N = 15 and M = 3 in each GOP and that seven frame memories are used to implement all-frame reproduction at reverse single-speed.

Bit streams reproduced from a tape are rearranged in sequence as shown in Fig. 5 before being input to an MPEG decoder. Through the use of intervals between processes of B-pictures, bit streams of I- and P-pictures are input first to the decoder for decoding in the forward direction. I- and P-pictures of one GOP are stored into the frame memories. In reference to these stored pictures, a bit stream of a B-picture is later input to the decoder for decoding. More specifically, with P15 of the new GOP being displayed (S10), I3 of the preceding GOP is decoded (S11). With P12 on display (S12) P6 is decoded (S13). While P9 is being displayed (S14), P9 is decoded (S15). With P6 displayed (S16), P12 is decoded (S17), and so on.

On a boundary between GOPs, B-pictures B2 and B1 are decoded by referring to I-picture I3 of the new GOP which is left in the frame memory as well as to the last P-picture P15 of the preceding GOP which is later decoded. The B-pictures B2 and B1 thus have two reference pictures spanning two GOPs. Thereafter, bit streams of B14 and B13 interposed between P15 and P12 are input to the decoder for decoding and display, followed by bit streams of B11 and B10 interposed between P12 and P9, and so on. A P-picture of an older GOP is decoded and stored into the frame memory whose P-picture has already been referred to.

As described, arrangements may be made according to the invention to have each picture decoded only once, which amounts to a significant reduction in processing time. This makes it possible to utilize for reverse reproduction a decoder capable of processing only one frame per frame time.

In the above example, seven frame memories were shown to be employed. The number of frame memories varies depending on the values N and M in the GOP. That is, as many as (N/M + 2) frame memories need to be installed. The processing functions described above may be implemented by a computer. In such a case, processing details of the functions that the MPEG reproducing apparatus should be equipped with are described in a program that is stored on a recording medium in a computer-readable manner. Having the program executed by the computer causes the latter to implement the above-described processing. Computer-readable recording media include magnetic recording devices and semiconductor memories. For marketing and distribution purposes, the program may be carried by such portable recording media as CD-ROMs (compact disc read only memory) and floppy discs, or may be stored in a storage device of a computer connected to a network over which the program may be transferred to other computers. For execution of the program on a computer, the program is first stored into a hard disc or like device within the computer and then loaded out from there into its main memory.

As described above and according to the invention, picture types of MPEG bit streams are first identified. Upon reverse reproduction, a decoding sequence of the bit streams is determined in accordance with the picture type information thus acquired. The bit streams are decoded in the determined sequence by the MPEG decoding means. Illustratively, an I-picture or a P-picture to be referred to is decoded prior to other pictures in order to suppress wasteful decoding steps. This allows all MPEG frames to be reproduced in the backward direction at single speed.

In the inventive MPEG reproducing apparatus for decoding and storing specific I- and P-pictures of a desired GOP prior to B-pictures, the I- and P-pictures serving as reference pictures for B-pictures are decoded and stored in advance of these B-pictures. This means that each picture is decoded only once, which allows the MPEG decoder having the same processing speed as that for forward reproduction to reproduce all MPEG frames in reverse at single speed.

As many apparently different embodiments of this invention may be made without departing from the scope thereof, it is to be understood that the invention is not limited to the specific embodiments thereof except as defined in the appended claims.

## Claims

1. An MPEG reproducing apparatus for reproducing MPEG bit streams based on an MPEG standard, the MPEG denoting the Moving Picture Experts Group, the apparatus comprising:
a picture type identifying means for identifying picture types of said MPEG bit streams;
a reversely reproduced picture controlling means for controlling a decoding sequence of said MPEG bit streams in accordance with said picture types upon reverse reproduction;
an MPEG decoding means for creating picture data by subjecting to MPEG decoding the bit stream designated by said reversely reproduced picture controlling means; and
a frame storing means for storing said picture data.

2. An MPEG reproducing apparatus according to claim 1, wherein said reversely reproduced picture controlling means decodes sequentially, prior to decoding of a B-picture, bit streams of an I-picture and a P-picture necessary for creating said B-picture.

3. An MPEG reproducing apparatus for reproducing MPEG bit streams, comprising:
a picture type identifying means for identifying picture types of said MPEG bit streams;
a reversely reproduced picture controlling means for decoding bit streams of an I-picture and a P-picture of a GOP which stands for a group of pictures, prior to a bit stream of a B-picture of the same GOP;
an MPEG decoding means for creating picture data by subjecting to MPEG decoding the bit stream designated by said reversely reproduced picture controlling means; and
a frame storing means for storing all I-picture data and P-picture data included in said GOP.

4. An MPEG reproducing method for reproducing MPEG bit streams, comprising the steps of:
identifying picture types of said MPEG bit streams by analyzing headers thereof;
rearranging a decoding sequence of said MPEG bit streams in accordance with said picture types upon reverse reproduction;
creating picture data by subjecting said MPEG bit streams to MPEG decoding in the sequence rearranged in the rearranging step; and
storing the created picture data as needed.

5. An MPEG reproducing method according to claim 4, wherein said step of rearranging the decoding sequence of said MPEG bit streams in accordance with said picture types upon reverse reproduction involves decoding sequentially, prior to decoding of a B-picture, bit streams of an I-picture and a P-picture necessary for creating said B-picture.

6. An MPEG reproducing method according to claim 4, wherein said step of rearranging the decoding sequence of said MPEG bit streams in accordance with said picture types upon reverse reproduction involves decoding bit streams of an I-picture and a P-picture of a GOP prior to decoding of the bit stream of a B-picture of the same GOP; and
wherein said step of storing the created picture data involves storing all I-picture data and B-picture data included in said GOP.

7. An MPEG reproducing apparatus for reproducing MPEG bit streams based on an MPEG standard, the MPEG denoting the Moving Picture Experts Group, said apparatus comprising:
an MPEG picture selecting means for selecting picture data of specific picture types after identifying the picture types of said MPEG bit streams upon reverse reproduction;
an MPEG decoding means for decoding the MPEG picture data selected by said MPEG picture selecting means; and
a frame storing means for storing the decoded picture data as needed.

8. An MPEG reproducing apparatus according to claim 7, wherein said MPEG picture selecting means selects an I-picture type and a P-picture type as said picture types.

9. An MPEG reproducing apparatus according to claim 8, wherein said MPEG picture selecting means selects successively, prior to picture data of a P-picture to be decoded, the picture data of I- and P-picture types necessary for creating said P-picture.

10. An MPEG reproducing method for reproducing MPEG bit streams based on an MPEG standard, the MPEG denoting the Moving Picture Experts Group, the method comprising the steps of:
reading MPEG bit streams from an MPEG recording medium upon reverse reproduction;
selecting picture data of specific picture types after identifying the picture types of said MPEG bit streams;
decoding the selected MPEG picture data;
storing the decoded picture data as needed; and
displaying the stored picture data.

11. An MPEG reproducing method according to claim 10, wherein said selecting step selects an I-picture type and a P-picture type, and then selects successively, prior to picture data of a P-picture to be decoded, the picture data of either said I-picture type or said P-picture type necessary for decoding said P-picture.
